# EUROPÄISCHE PATENTSCHRIFT

(11) **EP 2 544 929 B1**
(45) Veröffentlichungstag und Bekanntmachung des Hinweises auf die Patenterteilung: **19.10.2016**
(21) Anmeldenummer: 10707046.8
(22) Anmeldetag: 08.03.2010
(51) Int. Cl.: B60S 3/06

(54) **VORRICHTUNG ZUR LAGERUNG EINER SEITENWASCHBÜRSTE UND FAHRZEUGWASCHANLAGE MIT EINER DERARTIGEN VORRICHTUNG**
DEVICE FOR SUPPORTING A SIDE WASHING BRUSH AND VEHICLE-WASHING SYSTEM HAVING SUCH A DEVICE
ÉQUIPEMENT POUR SUPPORTER UNE BROSSE DE LAVAGE LATÉRALE ET INSTALLATION DE LAVAGE DE VÉHICULE MUNIE D'UN TEL ÉQUIPEMENT

(43) Veröffentlichungstag der Anmeldung: 16.01.2013
(73) Patentinhaber: Alfred Kärcher GmbH & Co. KG, 71364 Winnenden (DE)
(72) Erfinder: HEID, Claus, 70186 Stuttgart (DE); SPECKMAIER, André, 71543 Wüstenrot (DE); VEITZ, Yann, 74372 Sersheim (DE); FEISTKORN, Ingo, 67159 Friedelsheim (DE); KNISEL, Bernd, 71229 Leonberg (DE)
(74) Vertreter: Hoeger, Stellrecht & Partner Patentanwälte mbB
(86) Internationale Anmeldenummer: PCT/EP2010/052912
(87) Internationale Veröffentlichungsnummer: WO 2011/110211

(56) Entgegenhaltungen:
- DE-A1- 3 239 530
- DE-A1- 19 514 047
- US-A- 4 513 467
- US-A- 5 361 443

## Beschreibung

Die Erfindung betrifft eine Vorrichtung zur Lagerung einer um eine Drehachse drehbaren Seitenwaschbürste einer Fahrzeugwaschanlage, wobei die Vorrichtung eine Lagereinrichtung zur drehbaren Lagerung einer Antriebswelle umfasst sowie eine mit der Lagereinrichtung verbundene Halteeinrichtung, die mittels oberhalb und unterhalb der Halteeinrichtung angeordneter elastischer Pufferelemente an einem Gestell gehalten ist.

Außerdem betrifft die Erfindung eine Fahrzeugwaschanlage mit einer derartigen Vorrichtung und einer an der Vorrichtung gehaltenen Seitenwaschbürste.

Zum Reinigen eines Fahrzeugs in einer Fahrzeugwaschanlage kommen üblicherweise mindestens zwei Seitenwaschbürsten zum Einsatz, die um vertikal ausgerichtete Drehachsen gedreht werden können und die zur Reinigung der Seitenteile des Fahrzeuges dienen. Die Seitenwaschbürsten berühren die Seitenteile des Fahrzeuges, wobei sie allerdings keine allzu großen Drücke auf das Fahrzeug ausüben dürfen, da ansonsten die Gefahr einer Beschädigung des Fahrzeuges besteht. Die Seitenwaschbürsten sind daher üblicherweise oberhalb des Fahrzeuges jeweils an einer Vorrichtung schwenkbar gehalten. Die Vorrichtung umfasst eine Lagereinrichtung, die eine mit der Seitenwaschbürste drehfest verbindbare Antriebswelle lagert. Die Lagereinrichtung ist an einer Halteeinrichtung gehalten, die ihrerseits an einem Gestell der Vorrichtung gehalten ist. Die Verbindung zwischen der Halteeinrichtung und dem Gestell erfolgt über elastische Pufferelemente, die oberhalb und unterhalb der Halteeinrichtung angeordnet sind und diese bereichsweise zwischen sich aufnehmen. Mit Hilfe der elastischen Pufferelementen ist sichergestellt, dass die mit der Antriebswelle verbundene Seitenwaschbürste beim Reinigen eines Fahrzeuges aus der Vertikalrichtung ausgelenkt werden kann, ohne dass dies zu einer Beschädigung der Lagereinrichtung oder des Gestells führt. Die Seitenwaschbürste ist somit mittels der Pufferelemente schwenkbar gelagert, so dass sie sich neigen kann, um schräg verlaufende Fahrzeugteile zu erreichen.

Eine Vorrichtung der voranstehend genannten Art ist aus der DE 32 39 530 A1 bekannt. Die Halteeinrichtung weist hierbei eine Ringscheibe auf, die die Lagereinrichtung in Umfangsrichtung umgibt. Die Ringscheibe ist zwischen federelastischen oberen Pufferelementen und federelastischen unteren Pufferelementen angeordnet, die jeweils mit der Ringscheibe und mit fixen Widerlagern verschraubt sind. Bei einer Auslenkung der Seitenwaschbürste aus der Vertikalrichtung üben die Pufferelemente elastische Zug- und Druckkräfte auf die Ringscheibe aus. Die Seitenwaschbürste kann dadurch eine Ausweichbewegung ausführen. Es besteht allerdings die Gefahr, dass die Pufferelemente insbesondere bei größeren Auslenkungen der Seitenwaschbürste beschädigt werden.

Aufgabe der vorliegenden Erfindung ist es, eine Vorrichtung zur Lagerung einer um eine Drehachse drehbaren Seitenwaschbürste der gattungsgemäßen Art derart weiterzubilden, dass die Gefahr einer Beschädigung der Pufferelemente bei größeren Auslenkungen der Seitenwaschbürste reduziert und die Lebensdauer einer Fahrzeugwaschanlage mit einer derartigen Vorrichtung und einer daran gehaltenen Seitenwaschbürste verlängert wird.

Diese Aufgabe wird durch eine Vorrichtung mit den Merkmalen von Patentanspruch 1 gelöst.

In die Erfindung fließt der Gedanke mit ein, dass die Gefahr einer Beschädigung der elastischen Pufferelemente insbesondere bei größeren Auslenkungen der Seitenwaschbürste reduziert werden kann, indem diese lediglich Druckkräfte auf die Halteeinrichtung ausüben, nicht aber auch Zugkräfte. Die Pufferelemente werden somit lediglich auf Kompression beaufschlagt, nicht aber auch auf eine Dehnung. Da insbesondere bei einer starken Dehnungsbeanspruchung die Gefahr einer Beschädigung der Pufferelemente besteht, wird eine derartige Gefahr bei der erfindungsgemäßen Vorrichtung vermieden, da die Pufferelemente lediglich einer Kompressionsbelastung unterliegen, wobei sie auf die Halteeinrichtung Druckkräfte ausüben.

Die Halteeinrichtung kann beispielsweise in Form einer Halteplatte ausgestaltet sein, die von der Lagereinrichtung durchgriffen wird. Die Halteplatte kann zwischen einem oberen Pufferelement und einem unteren Pufferelement angeordnet sein und von diesen mit Druckkräften beaufschlagbar sein.

Die Halteeinrichtung kann auch mehrere Haltearme aufweisen, die jeweils einen zwischen einem oberen Pufferelement und einem unteren Pufferelement angeordneten Halteabschnitt aufweisen.

Bei der erfindungsgemäßen Vorrichtung nehmen die elastischen Pufferelemente die Halteeinrichtung zumindest bereichsweise zwischen sich auf. Netztere nimmt bei vertikaler Ausrichtung der Seitenwaschbürste eine Mittellage ein. Wird die Seitenwaschbürste zur Vertikalen geneigt, so wird die Halteeinrichtung aus der Mittellage ausgelenkt. Hierbei üben die Pufferelemente elastische Druckkräfte auf die Halteeinrichtung aus, um die Halteeinrichtung zusammen mit der Seitenwaschbürste in die Ausgangslage zurückzuführen. Zugkräfte können jedoch von den Pufferelementen nicht auf die Halteeinrichtung ausgeübt werden.

Die Pufferelemente können ohne Zwischenschaltung von Verbindungselementen oberseitig und unterseitig an der Halteeinrichtung anliegen. Bewegt sich die Halteeinrichtung bei einer Auslenkung aus der Mittellage beispielsweise von einem unteren Pufferelement weg, so verringert sich die von diesem Pufferelement auf die Halteeinrichtung ausgeübte Kraft, wohingegen ein oberes Pufferelement komprimiert wird und daher die Halteeinrichtung mit einer Druckkraft beaufschlagt.

Günstigerweise ist die Halteeinrichtung ausschließlich über die Pufferelemente am Gestell gehalten.

Es kann vorgesehen sein, dass die oberen und die unteren Pufferelemente in einer Mittellage der Halteeinrichtung, in der die Antriebswelle vertikal ausge-richtet ist, elastisch vorgespannt sind, so dass sowohl das mindestens eine obere Pufferelement als auch das mindestens eine untere Pufferelement die Halteeinrichtung mit einer Druckkraft beaufschlagen.

Alternativ kann vorgesehen sein, dass die Halteeinrichtung in ihrer Mittellage lediglich von den unteren Pufferelementen mit einer der Gewichtskraft der Halteinrichtung entgegenwirkenden Druckkraft beaufschlagt werden, die oberen Pufferelemente jedoch abgesehen von ihrer eigenen Gewichtskraft kräftefrei auf der Oberseite der Halteeinrichtung aufsitzen. Erst bei einer Auslenkung der Halteeinrichtung aus der Mittellage wird bei einer derartigen Ausgestaltung der Erfindung von dem mindestens einen oberen Pufferelement eine Druckkraft auf die Halteeinrichtung ausgeübt, so dass diese mit einer federelastischen Rückstellkraft in Richtung ihrer Mittellage beaufschlagt wird.

Bei einer besonders bevorzugten Ausgestaltung der Erfindung sind jeweils ein oberes Pufferelement und ein unteres Pufferelement gemeinsam von einem starren Widerlager umgriffen, das am Gestell festgelegt ist. Das Widerlager bildet eine gemeinsame Halterung für ein oberes und ein unteres Pufferelement aus, an dem sich die beiden Pufferelemente abstützen können.

Günstigerweise ist das Widerlager C-, Ω- oder U-förmig ausgestaltet. Es kann beispielsweise zwei Schenkel aufweisen, die über einen Steg miteinander verbunden sind. Die beiden Schenkel können parallel zur Antriebswelle ausgerichtet und über den Steg miteinander verbunden sein. Der Steg kann über seine gesamte Länge geradlinig verlaufen, es kann jedoch auch vorgesehen sein, dass der Steg bogenförmig oder V-förmig gebogen ist.

Günstigerweise sind die beiden Schenkel einstückig mit dem Steg verbunden.

Von besonderem Vorteil ist es, wenn die Schenkel an ihren freien Enden Haltelaschen tragen zur Aufnahme von Verbindungselementen. Über die Verbindungselemente können die Schenkel mit dem Gestell verbunden werden. Beispielsweise kann vorgesehen sein, dass die Schenkel mit dem Gestell verschraubt werden können.

Besonders günstig ist es, wenn die Schenkel an ihren Längskanten streifenförmige Vorsprünge tragen, die das obere Pufferelement und das untere Pufferelement hintergreifen. Das obere und das untere Pufferelement können dadurch auf einfache und mechanisch belastbare Weise am Gestell festgelegt werden.

Bei einer vorteilhaften Ausführungsform ist das Widerlager aus einem Flachmaterial geformt. Insbesondere kann vorgesehen sein, dass das Widerlager aus einem Blech geformt ist.

Zur Vereinfachung der Montage der erfindungsgemäßen Vorrichtung ist bei einer vorteilhaften Ausführungsform vorgesehen, dass das Widerlager mit dem Gestell lösbar verbindbar ist.

Günstig ist es, wenn jeweils ein oberes Pufferelement auf einem unteren Pufferelement aufsitzt. Die beiden Pufferelemente können unmittelbar aneinander anliegen.

Die Haltearme können in Umfangsrichtung der Lagereinrichtung gleichmäßig verteilt angeordnet sein.

Vorzugsweise sind die Haltearme radial zur Antriebswelle ausgerichtet.

Es kann beispielsweise vorgesehen sein, dass drei, vier oder fünf Haltearme außenseitig von der Lagereinrichtung abstehen.

Von Vorteil ist es, wenn das obere Pufferelement und/oder das untere Pufferelement mit dem Halteabschnitt einen Formschluss ausbilden. Dies erleichtert die Montage der Vorrichtung. Das obere Pufferelement und/oder das untere Pufferelement kann eine Ausnehmung aufweisen, in die der Halteabschnitt eintaucht. Günstigerweise umfassen sowohl das obere Pufferelement als auch das untere Pufferelement jeweils eine Ausnehmung, wobei die beiden Pufferelemente den Halteabschnitt in Umfangsrichtung über einen Bereich von jeweils 180° umgeben.

Die Haltearme können als Rundprofil oder auch als Mehrkantprofil ausgestaltet sein.

Bei einer vorteilhaften Ausführungsform sind die Haltearme als Vierkantprofil ausgestaltet. Dies verleiht der Vorrichtung eine besonders hohe Stabilität.

Die Haltearme sind bevorzugt als Hohlprofil ausgebildet.

Um die mechanische Belastung der Pufferelemente zu reduzieren, ist es bei Ausgestaltung der Haltearme in Form von Vierkantprofilen von Vorteil, wenn die Pufferelemente jeweils einem Eckbereich des Vierkantprofils zugeordnet eine Aussparung aufweisen. Die Gefahr, dass die Pufferelemente in der Nähe eines Eckbereichs des Vierkantprofils einreißen, kann dadurch gering gehalten werden.

Das Gestell der erfindungsgemäßen Vorrichtung ist bevorzugt als Transportwagen ausgestaltet und weist eine Bodenplatte auf, auf der das mindestens eine untere Pufferelement aufsitzt. Die Halteeinrichtung kann sich über das mindestens eine untere Pufferelement an der Bodenplatte abstützen.

Die Bodenplatte kann eine zentrale Bohrung aufweisen, die von der Lagereinrichtung durchgriffen wird. Oberhalb der Bodenplatte ist die Lagereinrichtung bevorzugt starr mit der Halteeinrichtung verbunden, die sich über das mindestens eine untere Pufferelement an der Bodenplatte abstützt. Das mindestens eine obere Pufferelement kann an der Oberseite der Halteeinrichtung anliegen und diese bei einer Auslenkung der Halteeinrichtung aus der Mittellage mit einer Druckkraft beaufschlagen.

Günstigerweise ist an der Lagereinrichtung eine Antriebseinrichtung mit einem die Antriebswelle drehend antreibbaren Antriebsmotor gehalten. Zwischen den Antriebsmotor und die Antriebswelle kann ein Getriebe geschaltet sein, insbesondere ein Winkelgetriebe.

Wie eingangs erwähnt, betrifft die Erfindung auch eine Fahrzeugwaschanlage mit mindestens einer Vorrichtung der voranstehend genannten Art und mit einer an der Vorrichtung gehaltenen Seitenwaschbürste.

Die Fahrzeugwaschanlage weist bevorzugt ein Portal auf mit zwei seitlich neben dem zu reinigenden Fahrzeug positionierbaren Stützen und mit einer oberhalb des Fahrzeugs verlaufenden und die beiden Stützen miteinander verbindenden Traverse. An der Traverse kann mindestens eine Vorrichtung der voranstehend genannten Art zur Lagerung der Seitenwaschbürste angeordnet sein.

Günstigerweise ist das Gestell der Vorrichtung längs der Traverse der Fahrzeugwaschanlage verfahrbar. Das Gestell kann hierzu in Form eines Transportwagens ausgestaltet sein und Laufräder umfassen, mit deren Hilfe das Gestell längs der Traverse verfahrbar ist.

Die nachfolgende Beschreibung einer bevorzugten Ausführungsform der Erfindung dient im Zusammenhang mit der Zeichnung der näheren Erläuterung. Es zeigen:
- Figur 1:: eine Vorderansicht auf eine erfindungsgemäße Fahrzeugwaschanlage mit zwei Seitenwaschbürsten, die jeweils an einer erfindungsgemäßen Vorrichtung um ihre Drehachse drehbar gelagert sind;
- Figur 2:: eine perspektivische Darstellung einer erfindungsgemäßen Vorrichtung zur Lagerung einer Seitenwaschbürste mit einem als Transportwagen ausgestalteten Gestell, an dem mittels Pufferelemente eine Halteeinrichtung elastisch gehalten ist; und
- Figur 3:: eine perspektivische Darstellung einer erfindungsgemäßen Vorrichtung ohne Transportwagen.

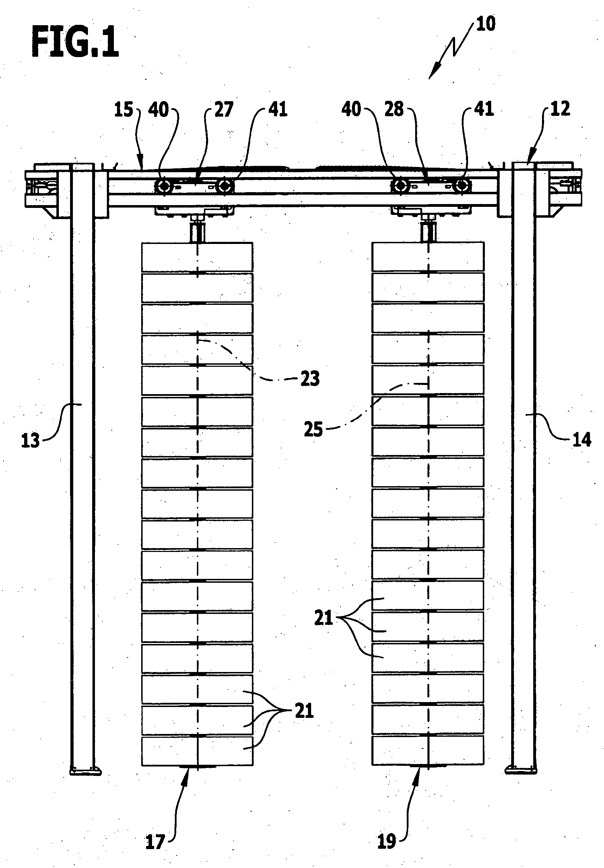

In Figur 1 ist schematisch eine erfindungsgemäße Fahrzeugwaschanlage 10 dargestellt mit einem Portal 12, das zwei vertikale Stützen 13, 14 aufweist, die an ihrem oberen Ende über eine horizontale Traverse 15 miteinander verbunden sind. An der Traverse 15 sind eine erste Seitenwaschbürste 17 und eine zweite Seitenwaschbürste 19 längs der Traverse 15 verfahrbar gehalten. Die beiden Seitenwaschbürsten 17, 19 sind im dargestellten Ausführungsbeispiel mit Waschelementen in Form von Vliesstreifen 21 ausgestattet. Alternativ können die Seitenwaschbürsten 17 und 19 auch mit Borsten ausgestattet sein.

Die Seitenwaschbürsten 17 und 19 sind jeweils um ihre Drehachse 23 bzw. 25 drehend antreibbar und können zur Reinigung schräg verlaufende Seiteinbereiche eines Fahrzeuges aus ihrer in Figur 1 dargestellten Vertikalstellung ausgeschwenkt werden. Sie sind hierzu an identisch ausgestalteten erfindungsgemäßen Lagervorrichtungen 27, 28 gehalten, mit denen sie längs der Traverse 12 verfahren werden können. Da die Lagervorrichtungen 27, 28 identisch ausgebildet sind, wird nachfolgend lediglich die Lagervorrichtung 27 im Detail erläutert. Die Erläuterungen treffen jedoch in gleicher Weise auch auf die Lagervorrichtung 28 zu.

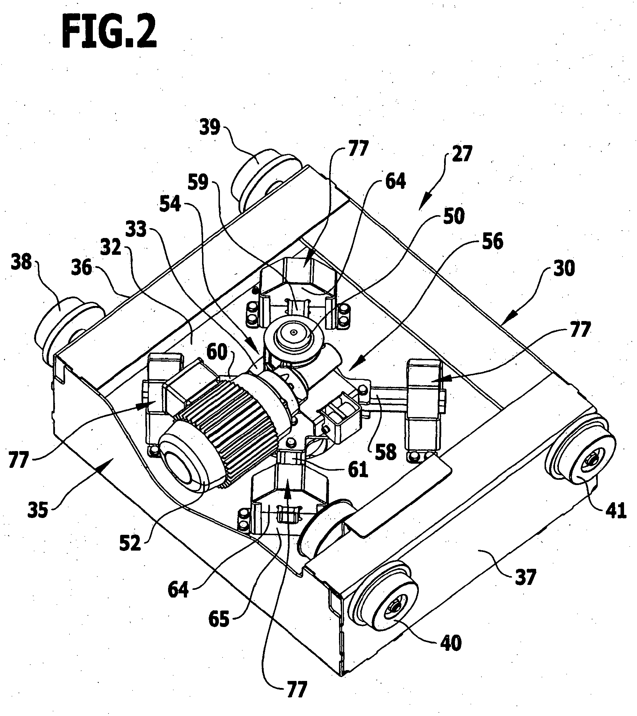

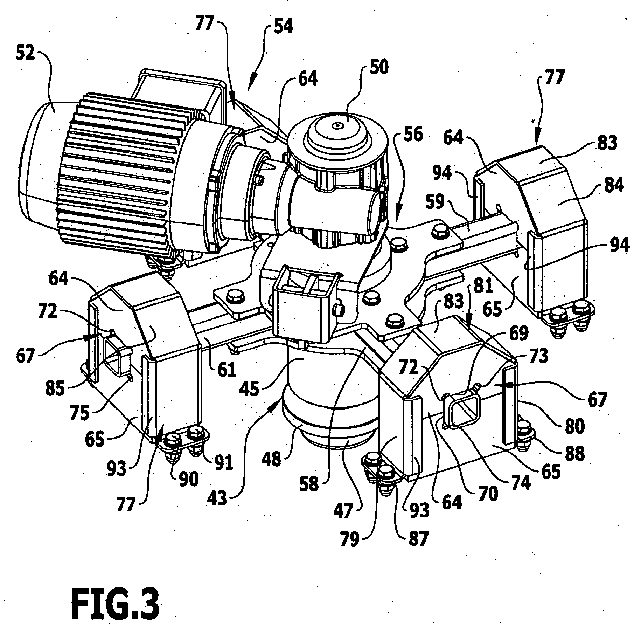

In den Figuren 2 und 3 ist die Lagervorrichtung 27 schematisch dargestellt. Sie umfasst ein Gestell, das in Form eines Transportwagens 30 ausgestaltet ist und eine Bodenplatte 32 aufweist mit einer zentralen Durchgangsbohrung 33.

Die Bodenplatte 32 ist von einem kastenförmigen Rahmen 35 umgeben, der an einander abgewandten Längsseiten 36, 37 nach außen abstehende Laufräder 38, 39 bzw. 40, 41 trägt. Mittels der Laufräder 38, 39 und 40, 41 kann der Transportwagen 30 längs der Traverse 15 verfahren werden. Die Durchgangsbohrung 33 der Bodenplatte 32 wird von einer Lagereinrichtung 43 durchgriffen. Diese umfasst ein Drehlager 45, in dem eine Antriebswelle 47 drehbar gelagert ist. Die Antriebswelle 47 trägt in ihrem aus dem Drehlager 45 nach unten hervorstehenden Endbereich einen Flansch 48. Die Seitenwaschbürste 10 ist mit dem Flansch 48 drehfest verbindbar.

Oberhalb der Lagereinrichtung 43 ist ein Winkelgetriebe 50 angeordnet, über das die Antriebswelle 47 mit der Motorwelle eines seitlich am Winkelgetriebe 50 positionierten Antriebsmotors 52 verbunden ist. Das Winkelgetriebe 50 bildet in Kombination mit dem Antriebsmotor 52 eine Antriebseinrichtung 54 aus.

Zur Halterung der Lagereinrichtung 43 an der Bodenplatte 32 des Transportwagens 30 kommt eine Halteeinrichtung 56 zum Einsatz mit vier radial zur Antriebswelle 47 ausgerichteten Haltearmen 58, 59, 60 und 61, die jeweils als Vierkantprofil ausgestaltet und senkrecht zueinander ausgerichtet sind Die freien Endbereiche der Haltearme 58, 59, 60 und 61 bilden jeweils einen Halteabschnitt aus, an dem ein oberes Pufferetement 64 und ein unteres Pufferelement 65 angeordnet ist. Das obere Pufferelement 64 bildet in Kombination mit dem zugeordneten unteren Pufferelement 65 einen den Halteabschnitt des jeweiligen Haltearmes 58, 59, 60 bzw. 61 in Umfangsrichtung vollständig umgebenden zweiteiligen Pufferring 67, der aus einem gummielastischen Material gefertigt ist. Das untere Pufferelement 65 stützt sich an der Bodenplatte 32 ab, und das obere Pufferelement 64 sitzt unter Zwischenlage des Halteäbschnitts eines Haltearmes 58, 59, 60 bzw. 61 auf dem unteren Pufferetement 65 auf. Die beiden Pufferelemente 64 und 65 weisen jeweils eine U-förmige Ausnehmung 69 bzw. 70 auf, in die der jeweilige Haltearm 58, 59, 60 bzw. 61 formschlüssig eintaucht. Den Eckbereichen des Haltearmes zugeordnet weisen die Ausnehmungen 69 und 70 jeweils eine zusätzliche Aussparung 72, 73 bzw. 74, 75 auf, die sicherstellen, dass die Pufferelemente 64, 65 in den Eckbereich des jeweiligen Haltearmes 58, 59, 60 bzw. 61 nicht einreissen.

Das obere Pufferelement 64 ist gemeinsam mit dem unteren Pufferelement 65 von einem Widerlager umgriffen, das im dargestellten Ausführungsbeispiel als U-förmige Klammer 77 ausgebildet ist, die aus einem Flachmaterial, vorzugsweise aus einem Metallblech geformt ist. Sie weist einen ersten Schenkel 79 und einen zweiten Schenkel 80 auf, die über einen Steg 81 einstückig miteinander verbunden sind und senkrecht zur Bodenplatte sowie parallel zur Antriebswelle 47 ausgerichtet sind. Der Steg 81 ist in der dargestellten Ausführungsform V-förmig ausgestaltet und weist einen parallel zur Bodenplatte 32 verlaufenden Stegboden 83 auf, der über schräg verlaufende Stegflanken 84 bzw. 85 mit dem ersten Schenkel 79 bzw. zweiten Schenkel 80 verbunden ist.

An ihren freien Enden tragen die Schenkel 79 und 80 jeweils eine Haltelasche 87, 88, die jeweils von zwei Schrauben 90, 91 durchgriffen sind. Mittels der Schrauben 90, 91 können die Haltelaschen 87 bzw. 88 mit der Bodenplatte 32 verschraubt werden. An ihren senkrecht zur Bodenplatte 32 verlaufenden Längskanten tragen die Schenkel 79 und 80 kreisförmige Vorsprünge in Form von Halteleisten 93, 94, die das obere Pufferelement 64 und das untere Pufferelement 65 hintergreifen.

Die erste Seitenwaschbürste 17 kann vom Antriebsmotor 52 über das Winkelgetriebe 50 und die Antriebswelle 47 um die Drehachse 23 in Drehung versetzt werden. Die gesamte Antriebseinrichtung 54 stützt sich hierbei zusammen mit der Lagereinrichtung 43 über die Halteeinrichtung 46 und die unteren Pufferelemente 65 an der Bodenplatte 32 ab. Um schräg zur Vertikale ausgerichtete Fahrzeugteile zu reinigen, kann die erste Seitenwaschbürste 17 schräg zur Vertikalen geneigt werden. Hierbei können ein unteres Pufferelement 65 eines ersten Pufferrings 67 und ein oberes Pufferelement 64 eines diametral gegenüberliegenden zweiten Pufferrings komprimiert werden, so dass sie über den jeweiligen Haltearm eine elastische Rückstellkraft auf die Lagereinrichtung 43 und die daran gehaltene Seitenwaschbürste 17 ausüben. Von den Pufferelementen 64 und 65 können auf die Haltearme 58, 59, 60, 61 lediglich Druckkräfte ausgeübt werden, indem die Pufferelemente 64 und 65 komprimiert werden. Es ist den Pufferelementen 64 und 65 aber nicht möglich, die jeweiligen Haltearme 58, 59, 60 und 61 mit einer Zugkraft zu beaufschlagen. Die Pufferelemente 64 und 65 liegen oberseitig bzw. unterseitig jeweils an einem Haltearm 58, 59, 60 bzw. 61 an, sie sind jedoch nicht mittels Verbindungselementen kraftschlüssig mit dem jeweiligen Haltearm 58, 59, 60 bzw. 61 verbunden. Hebt sich beispielsweise der Haltearm 58 bei einer Schwenkbewegung der Seitenwaschbürste 17 vom unteren Pufferelement 65 ab, so wird das obere Pufferelement 64 komprimiert und übt auf den Haltearm 58 eine Druckkraft aus. Mangels kraftschlüssiger Verbindung zum unteren Pufferelement 65 übt das untere Pufferelement aber keine Zugkraft auf das Halteelement 58 aus, d.h. das untere Pufferelement wird nicht auf Dehnung beansprucht.

Da die Pufferelemente 64 und 65 bei beliebigen Schwenkbewegungen der Seitenwaschbürste 70 lediglich einer Kompressionsbeanspruchung, nicht aber einer Dehnungsbeanspruchung unterliegen, ist die Gefahr einer Beschädigung der Pufferelemente 64 und 65 selbst bei großen Auslenkungen der Seitenwaschbürste 17 gering.

In gleicher Weise wie die erste Seitenwaschbürste 17 an der Lagervorrichtung 27 gehalten ist, ist die zweite Seitenwaschbürste 19 an der identisch ausgestalteten Lagervorrichtung 28 gehalten. Wiederum ist sichergestellt, dass die Haltearme 58, 59, 60 und 61 über einen Pufferring 67 elastisch an der Bodenplatte 32 gehalten sind, wobei der Pufferring 67 ein oberes Pufferelement 64 und ein unteres Pufferelement 65 aufweist, die bei beliebiger Schwenkbewegung der Seitenwaschbürste 19 lediglich einer Kompressionsbeanspruchung unterliegen, nicht aber einer Dehnungsbeanspruchung.

Die erfindungsgemäße Fahrzeugwaschanlage 10 zeichnet sich daher durch eine hohe Lebensdauer aus.

## Patentansprüche

1. Vorrichtung zur Lagerung einer um eine Drehachse (23; 25) drehbaren Seitenwaschbürste (17; 19) einer Fahrzeugwaschanlage (10), wobei die Vorrichtung (27; 28) eine Lagereinrichtung (43) zur drehbaren Lagerung einer Antriebswelle (47) umfasst sowie eine mit der Lagereinrichtung verbundene Halteeinrichtung (56), die mittels oberhalb und unterhalb der Halteeinrichtung angeordneter elastischer Pufferelemente (64, 65) an einem Gestell (30) gehalten ist, **dadurch gekennzeichnet, dass** die Halteeinrichtung (56) von den Pufferelementen (64, 65) nur mit in Richtung der Halteeinrichtung (56) ausgerichteten Druckkräften beaufschlagbar ist, wobei die Halteeinrichtung (56) mehrere Haltearme (58, 59, 60, 61) aufweist, die jeweils einen zwischen einem oberen Pufferelement (64) und einem unteren Pufferelement (65) angeordneten Halteabschnitt aufweisen, oder in Form einer Halteplatte ausgestaltet ist, die von der Lagereinrichtung (43) durchgriffen wird, und die zwischen einem oberen Pufferelement und einem unteren Pufferelement angeordnet ist und von diesen mit Druckkräften beaufschlagbar ist.

2. Vorrichtung nach Anspruch 1, **dadurch gekennzeichnet, dass** jeweils ein oberes Pufferelement (64) und ein unteres Pufferelement (65) gemeinsam von einem starren Widerlager (77) umgriffen sind, das am Gestell (30) festgelegt ist.

3. Vorrichtung nach Anspruch 2, **dadurch gekennzeichnet, dass** das Widerlager (77) C- oder U-förmig ausgestaltet ist.

4. Vorrichtung nach Anspruch 2 oder 3, **dadurch gekennzeichnet, dass** das Widerlager (77) aus einem Flachmaterial geformt ist.

5. Vorrichtung nach Anspruch 2, 3 oder 4, **dadurch gekennzeichnet, dass** das Widerlager (77) mit dem Gestell (30) lösbar verbindbar ist.

6. Vorrichtung nach einem der voranstehenden Ansprüche, **dadurch gekennzeichnet, dass** jeweils ein oberes Pufferelement (64) auf einem unteren Pufferelement (65) aufsitzt.

7. Vorrichtung nach einem der voranstehenden Ansprüche, **dadurch gekennzeichnet, dass** das obere Pufferelement (64) und/oder das untere Pufferelement (65) mit dem Halteabschnitt einen Formschluss ausbildet.

8. Vorrichtung nach einem der voranstehenden Ansprüche, **dadurch gekennzeichnet, dass** das obere Pufferelement (64) und/oder das untere Pufferelement (65) eine Ausnehmung (69; 70) aufweist, in die der Halteabschnitt eintaucht.

9. Vorrichtung nach einem der voranstehenden Ansprüche, **dadurch gekennzeichnet, dass** die Haltearme (58; 59; 60; 61) als Vierkantprofil ausgestaltet sind.

10. Vorrichtung nach Anspruch 9, **dadurch gekennzeichnet, dass** die oberen und die unteren Pufferelemente (64, 65) jeweils einem Eckbereich eines Vierkantprofils zugeordnet eine Aussparung (72, 73; 74, 75) aufweisen.

11. Vorrichtung nach einem der voranstehenden Ansprüche, **dadurch gekennzeichnet, dass** jeweils ein oberes Pufferelement (64) flächig an einem unteren Pufferelement (65) anliegt.

12. Vorrichtung nach einem der voranstehenden Ansprüche, **dadurch gekennzeichnet, dass** das Gestell als Transportwagen (30) ausgestaltet ist und eine Bodenplatte (32) aufweist, auf der die unteren Pufferelemente (65) aufsitzen.

13. Vorrichtung nach einem der voranstehenden Ansprüche, **dadurch gekennzeichnet, dass** an der Lagereinrichtung (43) eine Antriebseinrichtung (54) mit einem die Antriebswelle (47) drehend antreibenden Antriebsmotor (52) gehalten ist.

14. Fahrzeugwaschanlage mit mindestens einer Vorrichtung (27; 28) nach einem der voranstehenden Ansprüche und mit einer an der Vorrichtung (27; 28) gehaltenen Seitenwaschbürste (17; 19).

15. Fahrzeugwaschanlage nach Anspruch 14, **dadurch gekennzeichnet, dass** das Gestell (30) längs einer Traverse (15) der Fahrzeugwaschanlage (10) verfahrbar ist.

## Claims

1. Device for supporting a side washing brush (17; 19) of a vehicle washing system (10), which brush is rotatable about a rotational axis (23; 25), the device (27; 28) including a bearing unit (43) for rotatably supporting a drive shaft (47), and a holding device (56) which is connected to the bearing unit and which is held on a frame (30) by means of elastic cushioning elements (64, 65) arranged above and below the holding device, **characterized in that** the holding device (56) can be acted on by the cushioning elements (64, 65) only by compressive forces aligned in the direction of the holding device (56), the holding device (56) having a plurality of holding arms (58, 59, 60, 61), each of which has a holding portion that is situated between an upper cushioning element (64) and a lower cushioning element (65), or being configured in the form of a retaining plate through which the bearing unit (43) passes, and which is situated between an upper cushioning element and a lower cushioning element and can be acted on by these with compressive forces.

2. Device according to claim 1, **characterized in that** an upper cushioning element (64) and a lower cushioning element (65), in each case, are jointly surrounded by a rigid counter-support (77) which is fixed to the frame (30).

3. Device according to claim 2, **characterized in that** the counter-support (77) has a C- or U-shaped configuration.

4. Device according to claim 2 or 3, **characterized in that** the counter-support (77) is formed from a flat material.

5. Device according to claim 2, 3, or 4, **characterized in that** the counter-support (77) is detachably connectable to the frame (30).

6. Device according to one of the preceding claims, **characterized in that**, in each case, an upper cushioning element (64) rests on a lower cushioning element (65).

7. Device according to one of the preceding claims, **characterized in that** the upper cushioning element (64) and/or the lower cushioning element (65) forms/form a positive fit with the holding portion.

8. Device according to one of the preceding claims, **characterized in that** the upper cushioning element (64) and/or the lower cushioning element (65) has/have a recess (69; 70) in which the holding portion is engaged.

9. Device according to one of the preceding claims, **characterized in that** the holding arms (58; 59; 60; 61) are configured as a square profile.

10. Device according to claim 9, **characterized in that** the upper and the lower cushioning elements (64, 65) have a cut-out (72, 73; 74, 75) that is associated, in each case, with a corner region of a square profile.

11. Device according to one of the preceding claims, **characterized in that**, in each case, an upper cushioning element (64) lies flat against a lower cushioning element (65).

12. Device according to one of the preceding claims, **characterized in that** the frame is formed as a transport carriage (30) and has a base plate (32) on which the lower cushioning elements (65) rest.

13. Device according to one of the preceding claims, **characterized in that** a drive unit (54) having a drive motor (52) which rotationally drives the drive shaft (47) is mounted on the bearing unit (43).

14. Vehicle washing system having at least one device (27; 28) according to one of the preceding claims and having a side washing brush (17; 19) which is mounted on the device (27; 28).

15. Vehicle washing system according to claim 14, **characterized in that** the frame (30) is movable along a crossmember (15) of the vehicle washing system (10).

## Revendications

1. Equipement servant à supporter une brosse de lavage latérale (17 ; 19) d'une installation de lavage de véhicule (10), brosse qui peut tourner autour d'un axe de rotation (23 ; 25), l'équipement (27 ; 28) comprenant un dispositif support (43) pour supporter en rotation un arbre d'entraînement (47) ainsi qu'un dispositif de maintien (56) qui est relié au dispositif support et qui est maintenu sur un bâti (30) au moyen d'éléments tampons (64, 65) élastiques disposés au-dessus et au-dessous du dispositif de maintien, **caractérisé en ce que** le dispositif de maintien (56) ne peut être exposé par le biais des éléments tampons (64, 65) qu'aux forces de pression orientées en direction du dispositif de maintien (56), le dispositif de maintien (56) comprenant plusieurs bras de maintien (58, 59, 60, 61) qui comprennent respectivement une section de maintien disposée entre un élément tampon supérieur (64) et un élément tampon inférieur (65), ou étant réalisé sous la forme d'une plaque de maintien qui est traversée par le dispositif support (46) et qui est disposée entre un élément tampon supérieur et un élément tampon inférieur et peut être exposée par le biais de ces derniers à des forces de pression.

2. Equipement selon la revendication 1, **caractérisé en ce que** respectivement un élément tampon supérieur (64) et un élément tampon inférieur (65) sont entourés conjointement par une butée (77) rigide, qui est fixée sur le bâti (30).

3. Equipement selon la revendication 2, **caractérisé en ce que** la butée (77) est en forme de C ou de U.

4. Equipement selon la revendication 2 ou 3, **caractérisé en ce que** la butée (77) est formée d'un matériau plat.

5. Equipement selon la revendication 2, 3 ou 4, **caractérisé en ce que** la butée (77) peut être reliée de manière détachable au bâti (30).

6. Equipement selon l'une quelconque des revendications précédentes, **caractérisé en ce que** respectivement un élément tampon supérieur (64) repose sur un élément tampon inférieur (65).

7. Equipement selon l'une quelconque des revendications précédentes, **caractérisé en ce que** l'élément tampon supérieur (64) et/ou l'élément tampon inférieur (65) constitue une coopération de formes avec la section de maintien.

8. Equipement selon l'une quelconque des revendications précédentes, **caractérisé en ce que** l'élément tampon supérieur (64) et/ou l'élément tampon inférieur (65) comprend un évidement (69 ; 70) dans lequel pénètre la section de maintien.

9. Equipement selon l'une quelconque des revendications précédentes, **caractérisé en ce que** les bras de maintien (58 ; 59 ; 60 ; 61) sont réalisés sous la forme d'un profilé carré.

10. Equipement selon la revendication 9, **caractérisé en ce que** les éléments tampons supérieur et inférieur (64, 65) comprennent chacun un évidement (72, 73 ; 74, 75) associé à une zone de coin d'un profilé carré.

11. Equipement selon l'une quelconque des revendications précédentes, **caractérisé en ce que** respectivement un élément tampon supérieur (64) s'applique de manière plane contre un élément tampon inférieur (65).

12. Equipement selon l'une quelconque des revendications précédentes, **caractérisé en ce que** le bâti est réalisé sous la forme d'un chariot de transport (30) et comprend une plaque de base (32) sur laquelle les éléments tampons inférieurs (65) reposent.

13. Equipement selon l'une quelconque des revendications précédentes, **caractérisé en ce qu'**un dispositif d'entraînement (54) comprenant un moteur d'entraînement (52) entraînant en rotation l'arbre d'entraînement (47) est maintenu sur le dispositif support (43).

14. Installation de lavage de véhicule comprenant au moins un dispositif (27 ; 28) selon l'une quelconque des revendications précédentes et comprenant une brosse de lavage latérale (17 ; 19) maintenue sur l'équipement (27 ; 28).

15. Installation de lavage de véhicule selon la revendication 14, **caractérisée en ce que** le bâti (30) est mobile le long d'une traverse (15) de l'installation de lavage de véhicule (10).
